# EUROPÄISCHE PATENTSCHRIFT

(11) **EP 1 461 193 B1**
(45) Veröffentlichungstag und Bekanntmachung des Hinweises auf die Patenterteilung: **28.12.2011**
(21) Anmeldenummer: 02774782.3
(22) Anmeldetag: 15.11.2002
(51) Int. Cl.: B29C 33/60, B29C 67/24

(54) **TRENNMITTEL UND VERFAHREN ZUR HERSTELLUNG VON KUNSTSTOFFORMTEILEN**
MOULD RELEASE AGENTS AND METHOD FOR THE PRODUCTION OF PLASTIC MOULDING PARTS
AGENTS DE DEMOULAGE ET PROCEDE DE PRODUCTION DE PIECES MOULEES EN MATIERE PLASTIQUE

(30) Priorität: 28.11.2001 DE 10158154
(43) Veröffentlichungstag der Anmeldung: 29.09.2004
(73) Patentinhaber: Bayer MaterialScience AG, 51368 Leverkusen (DE)
(72) Erfinder: SIX, Christian, 41468 Neuss (DE); SCHNEIDER, Michael, 51519 Odenthal (DE)
(86) Internationale Anmeldenummer: PCT/EP2002/012818
(87) Internationale Veröffentlichungsnummer: WO 2003/045656

(56) Entgegenhaltungen:
- EP-A- 0 597 115
- EP-A- 1 008 429
- WO-A-01/17743
- WO-A-01/23160
- JP-A- 07 290 601
- US-A- 4 058 537
- PATENT ABSTRACTS OF JAPAN vol. 009, no. 078 (C-274), 6. April 1985 (1985-04-06) & JP 59 213716 A (NEOSU:KK;OTHERS: 01), 3. Dezember 1984 (1984-12-03)

## Beschreibung

Die vorliegende Erfindung betrifft Trennmittel für die Herstellung von Kunststoff-formteilen, die die Konzentration unerwünschter, potentiell gesundheitsschädlicher Substanzen in der Randzone und an der Oberfläche des Formteils verringern, sowie ein Verfahren zur Herstellung von schadstoffarmen Kunststoffformteilen unter Verwendung solcher Trennmittels.

Hochmolekulare synthetische Stoffe (Polymerisate) wie beispielsweise Kunststoffe, Kunstharze, Fasern und Elastomere spielen in der Technik eine außerordentlich wichtige Rolle. Die Verarbeitung von Kunststoffen geschieht beispielsweise durch Kalt- oder Warmverformung, insbesondere durch Walzen, Spritzen oder Pressen. Beim "Warmpressverfahren" gibt man das Material als Tablette oder Granulat in die Presse und erhitzt; das plastische gewordene Material füllt alle Hohlräume der Preßform genau aus und behält nach dem Abkühlen seine Form bei. Folien werden z.B. durch Verarbeiten von Lösungen gegossen. Die Herstellung von Kunststoffformteilen kann außer durch Verarbeitung von fertigen Polymerisaten in Form von Granulat o.ä. auch durch Umsetzung von Reaktionsmischungen erfolgen. Beispielsweise wird der größte Teil der Polyurethane, insbesondere der Polyurethanschaumstoffe, nach dem Einstufen- oder one-shot-Verfahren hergestellt, bei dem die eingesetzten Rohstoffkomponehten nach einer vorgegebenen Rezeptur genau dosiert und vermischt werden und das entstandene reaktionsfähige Gemisch dann aus der Mischkammer in Formgebungsvorrichtungen eingetragen wird. Ein anderes Verfahren ist das Zweistufen-Verfahren oder Prepolymer-Verfahren, welches z.B. für die Herstellung von Elastomeren von Bedeutung ist.

Während der Herstellung von Kunststoffformteilen kann es durch thermische Spaltung des Polymerisats zur Rückbildung von Monomeren kommen. Bei zahlreichen Polymerisaten sind diese zumeist sehr reaktionsfähigen Monomere als gesundheitsschädlich einzustufen. Ferner kann das Formteil noch Spuren anderer Reaktionnebenprodukte bzw. Spaltprodukte enthalten oder Additive wie Katalysatoren, Stabilisatoren, Emulgatoren, Treibmittel, etc., die gesundheitsschädlich sein können.

Es ist aus Gründen des Gesundheitsschutzes wünschenswert, die Konzentration derartiger potentiell gesundheitsschädlicher Stoffe möglichst gering zu halten. Hierfür wurden verschiedene Methoden vorgeschlagen. Neben der Eliminierung der unerwünschten Substanzen durch Nachbehandlung des Formteils, die aber zeitaufwendig und herstellkostentreibend ist, wird vor allem der Zusatz von Substanzen, die die unerwünschten Substanzen chemisch binden, zur Reaktionsmischung oder zum Polymerisat während der Verarbeitung empfohlen.

GB-A 1 565 124 lehrt, bei der Herstellung von Polyurethanschäumen den einzelnen Reaktivkomponenten eine Fängerverbindung für aromatische Amine, namentlich TDA (Toluylendiamin, Diaminotoluol), zuzusetzen. Aus den Beispielen geht als besonders wirksam der Zusatz von 0,5 bis 8 Gew.% aliphatischem Diisocyanat hervor, wobei allerdings erst bei Zusatz von ≥ 5 Gew.-% der kostspieligen aliphatischen Diisocyanate signifikante Erfolge erkennen lässt. Durch den Zusatz beträchtlicher Anteile aliphatischer Polyisocyanate werden jedoch die mechanischen bzw. physikalischen Eigenschaften der auf aromatischen Polyisocyanaten basierenden Polyurethanschaumstoffe negativ beeinflusst.

Aus DE-A 199 19 826, DE-A 199 19 827, DE-A 199 28 675, DE-A 199 28 676, DE-A 199 28 687, DE-A 199 28 688 und DE-A 199 28 689 gehen eine Vielzahl kostengünstigerer Zusätze bzw. Hilfsmittel aus unterschiedlichen chemischen Verbindungsklassen hervor, mit denen die intermediäre Bildung primärer aromatischer Diamine wie TDA oder MDA (Methylendiphenylendiamin) bei der Herstellung von Polyurethanweichschaumstoffen reduziert werden soll. Auch hier werden einer der beiden Reaktivkomponenten 1 bis 6 Gew.% des Hilfsmittels zugegeben.

Ein genereller Nachteil des Zusatzes derartiger Hilfsmittel zur Kunststoffformulierung, die als "Fänger" für unerwünschte Substanzen wirken, besteht im Auftreten signifikanter Veränderungen der mechanischen bzw. chemisch-physikalischen Spezifikation des Endproduktes, was gegebenenfalls eine Neu- oder Weiterentwicklung der Zusammensetzung der Formulierung oder des Polymerisat-Rohmaterials erforderlich macht. Dies gilt umso mehr, als meist erhebliche Mengen des Hilfsstoffs zugesetzt werden müssen, um die unerwünschten Substanzen effektiv zu eliminierten.

WO-A-0 117 743 offenbart Formtrennmittel, die mindestens eine gegenüber aromatischen Aminen reaktive Verbindung, ausgewählt aus der Gruppe von Derivaten von organishen Säuren und Anhydride-erthält

Bei der Herstellung von Kunststoffformteilen treten in der Kontaktzone zwischen Kunststoffmasse und der Formenwand Wechselwirkungen auf, so dass sich - teilweise nur im Spurenbereich - die Zusammensetzung des Kunststoffs in dieser Randzone von der Zusammensetzung im inneren Bereich (Kern) unterscheidet. Beispielsweise sind unmittelbar nach der Herstellung von Polyisocyanat-Polyadditionsprodukten auf Basis aromatischer Polyisocyanate die dem verwendeten Polyisocyanat chemisch zugrunde liegenden aromatischen Amine im Schaumstoff in Spurenkonzentrationen nachweisbar. Diese aromatischen Amine entstehen intermediär formal durch Hydrolyse der Isocyanatgruppen des eingesetzten Polyisocyanats unter Freisetzung von Kohlendioxid. Bei Polyurethan-Weichformschaumstoffen ist der Gehalt an diesen aromatischen Aminen in der Randzone (Haut) höher als im Inneren des Formteils (Kern).

Es ist also besonders wichtig, die Konzentration der unerwünschten Stoffe in der Randzone des Kunststoffformteils zu verringern. Dies ist auch deshalb erforderlich, weil die Oberflächen der Kunststoffformteile, insbesondere bei Gegenständen des täglichen Gebrauchs, die unmittelbaren Kontaktflächen zum Verarbeiter wie auch später zum Anwender darstellen.

Es wurde nun gefunden, dass sich die Konzentration unerwünschter, insbesondere potentiell gesundheitsschädlicher Substanzen auf den Oberflächen und in der Randzone von Kunststoffformteilen effektiv verringern lässt, wenn bei der Formteilherstellung Trennmittel eingesetzt werden, die einen oder mehrere Zusatzstoffe enthalten, die mit den unerwünschten Substanzen reagieren und so als "Fänger" für diese unerwünschten Substanzen wirken.

Für alle Verfahren, bei denen der Kunststoff an formgebenden Oberflächen (Preßformen, Walzen etc.) verarbeitet wird, ist es wichtig, dass das Endprodukt unbeschadet von der Oberfläche abgelöst bzw. aus der Form herausgelöst werden kann. Deshalb werden die formgebenden Oberflächen zwischen den einzelnen Verarbeitungsschritten (bei Formen) bzw. kontinuierlich (bei Walzen) mit einem Trennmittel beschichtet. Dieses verhindert das Verkleben des Kunststoffformteils mit der formgebenden Oberflächen.

Gegenstand der Erfindung sind Formtrennmittel nach Anspruch 1.

Erfindungsgemäß können einem handelsüblichen Trennmittel ein oder mehrere Zusatzstoffe zugesetzt werden, welche gegenüber den intermediär unerwünscht auftretenden Substanzen als "Fänger" auftreten, z.B. im Falle der Polyurethanweichformschaumstoffe in der Randzone aromatische Amine chemisch binden. Das Trennmittel wird lediglich als dünne Schicht bzw. Film auf die Oberfläche des Formteils aufgetragen und erlaubt die Minimierung der notwendigen Fängermenge. Es konnte überraschend festgestellt werden, dass derartige modifizierte Trennmittel die unerwünschten Substanzen in der Randzone von Kunststoffformteilen effektiv verringern können, wobei die ursprüngliche Wirkung des Trennmittels (Gewährleistung der Entformbarkeit, d.h. beschädigungsfreies Herausnehmen des Kunststoffformteils aus der Form) erhalten bleibt. Insbesondere lassen sich so bei der Herstellung von Polyurethanweichformschaumstoffen die im Vergleich zum Kern hohen Konzentrationen an aromatischen Aminen in der Haut sowohl direkt nach der Herstellung wie auch nach Lagerung deutlich verringern.

Es konnte ferner festgestellt werden, dass prinzipiell alle chemischen Verbindungen, die mit den unerwünschten Substanzen, die in der Randzone von Kunststoffformteilen enthalten sind, in Lösung oder in reiner Form reagieren, auch als Zusatzstoff in handelsüblichen Trennmitteln eingesetzt als "Fänger" fungieren. Durch das Einbringen des "Fängers" in geringer Konzentration in die inerte Matrix des Trennmittels wirkt dieser wesentlich effektiver als bei Zusatz zur Reaktionsmischung des herzustellenden Kunststoffformteils. In einigen Fällen kann eine "Fängerwirkung" bei Zugabe zur Reaktionsmischung gar nicht beobachtet werden.

Gegenstand der vorliegenden Erfindung sind somit Trennmittel für Kunststoffformteile, die einen oder mehrere Zusatzstoffe enthalten, die mit bei der Herstellung der Formteile entstehenden unerwünschten Substanzen, beispielsweise aromatischen Aminen, reagieren.

Effektive Zusatzstoffe für Trennmittel, die bei der Herstellung von Polyurethan-Polyadditionsprodukten eingesetzt werden, sind Di- oder Polyisocyanate der Formel Q(NCO)_{n,} in der n eine ganze Zahl von 2 bis 4 und Q einen aliphatischen Kohlenwasserstoffrest mit 2 bis 18 C-Atomen, einen cycloaliphatischen Kohlenwasserstoffrest mit 4 bis 15, C-Atomen, einen aromatischen Kohlenwasserstoffrest mit 6 bis 15 C-Atomen, oder einen araliphatischen Kohlenwasserstoffrest mit 8 bis 15 C-Atomen bedeuten,
Derivate von anorganischen Säuren,
Derivate von organischen Säuren ausgewählt aus der Gruppe bestehend aus Ameisensäuremethylester, Essigsäureethylester, Dodecansäuremethylester, Acetessigsäureethylester, Malonsäurediethylester, Lactone von C₃-C₆-Hydroxycarbonsäuren mit einem Molekulargewicht von 70 bis 300 g/mol, Kondensationsprodukte von aliphatischen, cycloaliphatischen, araliphatischen und/oder aromatischen Dicarbonsäuren mit 2 bis 15 Kohlenstoffatomen und aliphatischen, cycloaliphatischen, araliphatischen und/oder aromatischen Dialkoholen mit 2 bis 15 Kohlenstoffatomen, Ameisensäureanhydrid, Essigsäureanhydrid, Propionsäureanhydrid, Fumarsäureanhydrid, Adipinsäureanhydrid, Phthalsäureanhydrid, Glutarsäureanhydrid, Pyrrolidin-2,3,4,5-tetracarbonsäureanhydrid, Malonsäureanhydrid, Benzoesäureanhydrid, Polymaleinsäureanhydrid, Maleinsäureanhydrid, Pyromellitsäureanhydrid, Phenylessigsäureanhydrid, n-Octylenbernsteinsäureanhydrid, n-Dodicylen-bernsteinsäureanhydrid, Poly-(ethylen-co-acrylsäurebutylester-co-maleinsäureanhydrid und Poly-(styrol-comaleinsäureanhydrid,
Derivate der Kohlensäure ausgewählt aus der Gruppe bestehend aus Dimethylcarbonat, Diethylcarbonat, Diphenylcarbonat, Ethylencarbonat und Propylencarbonat,
Harnstoff und/oder dessen Derivate und
organische, cyclische Verbindungen mit einem Molekulargewicht von 200 bis 3000 g/mol ausgewählt aus der Gruppe bestehend aus α-Cyclodextrin, β-Cyclodextrin, γ-Cyclodextrin, Umsetzungsprodukte dieser Cyclodextrine mit Alkylenoxiden, 4-tert-Butylcalix[4]aren, 4-tert-Butylcalix[6]aren, 4-tert-Butylcalix[8]aren, 4-Sulfocalix[4]aren, 4-Sulfocalix[6]aren, 4-Sulfocalix[8]aren, C-Methylcalix[4]resorcinaren, Tetra-N-pentylcalix[4]resorcinaren und [2.2]Paracyclophan.

Di-oder Polyisocyanate sind aliphatische, cycloaliphatische, araliphatische, aromatische und heterocyclische Isocyanate der Formel Q(NCO)ₙ, in der n eine ganze Zahl von 2 bis 4, vorzugsweise 2, und Q einen aliphatischen Kohlenwasserstoffrest mit 2 bis 18, vorzugsweise 6 bis 12 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen, oder einen araliphatischen Kohlenwasserstoffrest mit 8 bis 15, vorzugsweise 8 bis 13 C-Atomen bedeuten. Bevorzugt sind die technisch leicht zugänglichen Polyisocyanate, z.B. 1,6-Hexamethylendiisocyanat, Isophorondiisocyanat (IPDI), 4,4'Dicyclohexamethylenmethandiisocyanat (H₁₂-MDI), Duroldiisocyanat, 1,4-Di-(isocyanatomethyl)cyclohexan, 1,3-Bis-(isocyanato-1-methylethyl)-benzol ("TMXDI"), das 2,4- und 2,6-Toluylendiisocyanat sowie beliebige Gemische dieser Isomeren ("TDI", z.B. Desmodur^{®} T80, Bayer AG), Polyphenyl-polymethylen-polyisocyanate, wie sie durch Anilin-Formaldehyd-Konden-sation und anschließende Phosgenierung hergestellt werden ("rohes MDI", z.B. Desmodur^{®} 44V20L, Bayer AG), Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat bzw. vom 1,6-Hexamethylendiisocyanat und/oder Isophorondiisocyanat ableiten. Die organischen Di- und Polyisocyanate können einzeln oder in Form ihrer Mischungen eingesetzt werden. Besonders bevorzugt sind TMXDI und cycloaliphatische Diisocyanate, insbesondere IPDI, 1,4-Di(isocyanatomethyl)cyclohexan und H₁₂-MDI (z.B. Desmodur^{®} W, Bayer AG).

Als Derivate von mineralischen Säuren können beispielsweise Dimethylsulfat, Diethylsulfat, Phosphorsäuretrimethylester und Ester von Polyphosphorsäuren eingesetzt werden.

Derivate organischer Säuren sind Ameisensäuremethylester, Essigsäureethylester, Dodecansäuremethylester, Acetessigsäureethylester, Malonsäurediethylester, Lactone von C₃-C₆-Hydroxycarbonsäuren mit einem Molekulargewicht von 70 bis 300 g/mol, wie β-Propiolacton, γ-Butyrolacton, γ-Verolacton, ε-Caprolacton, γ-Decanolacton, δ-Decanolacton, γγ-Dimethylbutyrolacton und/oder α-Ethyl-γ-methylbutyrolacton.

Weitere geeignete Derivate organischer Säuren sind Ameisensäureanhydrid, Essigsäureanhydrid, Propionsäureanhydrid, Fumarsäureanhydrid, Adipinsäureanhydrid, Phthalsäureanhydrid, Glutarsäureanhydrid, Pyrrolidin-2,3,4,5-tetracarbonsäureanhydrid, Malonsäureanhydrid, Benzoesäureanhydrid, Polymaleinsäureanhydrid, Maleinsäureanhydrid, Pyromellitsäureanhydrid, Phenylessigsäureanhydrid, n-Octylenbernsteinsäureanhydrid, n-Dodicylen-bernsteinsäureanhydrid, Poly-(ethylen-co-acrylsäurebutylester-co-maleinsäureanhydrid) oder Poly-(styrol-co-maleinsäureanhydrid).

Geeignet sind weiterhin Derivate der Kohlensäure ausgewählt aus der Gruppe bestehend aus Dimethylcarbonat, Diethylcarbonat, Diphenylcarbonat, Ethylencarbonat und Propylencarbonat.

Beispiele geeigneter Harnstoffe sind Verbindungen der allgemeinen Formel (R₁R₂N)C(=O)(NR₃R₄), wobei R₁, R₂, R₃ bzw. R₄ Wasserstoff oder aliphatische, cycloaliphatische, araliphatische oder aromatische Kohlenwasserstoffreste bedeuten, die auch verzweigtkettig und/oder substituiert sein können, sowie aliphatische, cycloaliphatische, araliphatische oder aromatische Amide der Kohlensäure, Urethane und cyclische Harnstoffe. Beispiele sind Harnstoff, Bis-(trimethylsilyl)-harnstoff, Tetramethylharnstoff, Tetraphenylharnstoff, Ethylenharnstoff und Propylenharnstoff.

Formtrennmittel sind Verarbeitungsadditive, durch deren Verwendung die Adhäsionskräfte zwischen zwei aneinander grenzenden Oberflächen (z.B. Formteil und Form) verringert werden, d.h. ihr Verkleben verhindert wird, indem das Formtrennmittel zwischen beiden Oberflächen einen leicht trennbaren Film ausbildet. Formtrennmittel werden in Form von Dispersionen (Emulsionen oder Suspensionen), Sprays, Pasten, Pulvern und permanenten, meist eingebrannten Trennmittelfilmen angewendet. Für die Kunststoffverarbeitung und Formschaumherstellung kommen vor allem Silicone (in Form von Ölen, Öl-Emulsionen in Wasser, Fetten, Harzen), Wachse (im wesentlichen natürliche oder synthetische Paraffine mit oder ohne funktionelle Gruppen), Metallseifen,Fette und Polymere zur Anwendung. Für die Auswahl des jeweils besten Trennmittels aus verarbeitungstechnischer Sicht ist nicht nur die Grundkenntnis des PUR-Systems notwendig, sondern auch die Art des Werkzeugmaterials, dessen Oberflächenbeschaffenheit und die Formteilgeometrie maßgebend.

Geeignete Trennmittel sind kommerziell erhältlich und werden beispielsweise angeboten von der ACMOS Chemie GmbH & Co. (z.B. Acmos^{®} 180-52), der RATEC International GmbH (z.B. PURA^{®} 1448H), der Firma Gorapur (z.B. Gorapur^{®} RT 835C, Gorapur^{®} LK 149, Gorapur^{®} LK 888, Gorapur^{®} LH 525, Gorapur^{®} LH 157A, Gorapur^{®} RT 2130B, Gorapur^{®} RT 1126B), der Marbo Italia S.A. (z.B. Marbo^{®} WR 95101/A) und der Productos Concentrol S.A. (z.B. Concentrol^{®} WB33A).

Wird bei der Herstellung der Polyurethanformteile ein Trennmittel verwendet, das mindestens eine der erfindungsgemäßen Zusatzstoffe zu einem Anteil von 0,0001 Gew.-% bis zu 20 Gew.-%, bevorzugt 0,001 Gew.-% bis 10 Gew.-%, besonders bevorzugt 0,05 Gew.-% bis 5 Gew.-%, enthält, weist die Randzone des Formteils eine deutlich verringerte Konzentration des dem verwendeten Polyisocyanat chemisch zugrunde liegenden aromatischen Amins auf. Als besonders wirksam haben sich diese erfindungsgemäßen Treibmittel bei der Herstellung von Polyurethanweichformschaumstoffteilen erwiesen, bei denen als Isocyanatkomponente aromatische Polyisocyanate eingesetzt werden.

Gegenstand der Erfindung ist daher auch ein Verfahren zur Herstellung von Kunststoffformteilen, bevorzugt von Kunststoffformteilen aus Reaktivkunststoffen; insbesondere Polyurethanen, besonders bevorzugt von Polyurethanformschäumen, insbesondere Polyurethanweichformschaumstoffen und Integralschaum, bei dem a) die Form mit einem erfindungsgemäßen Trennmittel vorbehandelt wird, b) in die vorbehandelte Form die zur Bildung des Formteils benötigte Kunststoffmasse eingebracht und das Formteil gebildet wird, und c) das gebildete Formteil anschließend entnommen wird.

Geeignete Formen zur Herstellung von Kunststoffformteilen sind dem Fachmann im Prinzip bekannt. In der Regel bestehen sie aus Metall, beispielsweise Stahl (z.B. Schwarzblech), Feingusslegierung oder Aluminium (z.B. Aluminiumblech oder Aluminiumguss) oder aus Kunststoff (z.B. Epoxidharz oder faserverstärktem Polyester). Je nach verwendetem Kunststoff und herzustellendem Formteil kann die Herstellung der Formteile in offenen oder geschlossenen, beheizten oder unbeheizten Formen erfolgen.

Die Behandlung der Form mit dem erfindungsgemäßen Trennmittel erfolgt in der dem Fachmann im Prinzip bekannten Weise, z.B. durch Aufsprühen; mit Druckluft in die geöffnete Form oder durch Aufstreichen mit einem Pinsel, Schwamm oder Tuch. Hierbei kommt es weniger auf die Menge des Trennmittels als auf einen gleichmäßigen Auftrag an.

In die vorbehandelte Form wird die zur Bildung des Formteils benötigte Kunststoffmasse eingebracht und das Formteil gebildet. Dies geschieht durch die dem Fachmann geläufigen Verfahren. Für die Herstellung von Schaumstoffen, z.B. PUR-Schaumstoffen, Polystyrol-Schaumstoffen (EPS), Styrol-Copolymer-Schaumstoffen, Polyisocyanurat-Schaumstoffen, Polycarbodiimid-Schaumstoffen, PVC-Schaumstoffen, Polycarbonat-Schaumstoffen, Polyolefin-Schaumstoffen, Polymethacrylimid-Schaumstoffen, Polyamid-Schaumstoffen, ABS-Schaumstoffen, Phenol- und Harnstoffharz-Schaumstoffen (UF-Schäume), eignen sich vor allem Spritzguss, Reaction Injection Molding' (RIM bzw. RRIM) und Blasformen bzw. Folienblasen.

Gegenstand der Erfindung ist auch die Verwendung der erfindungsgemäßen Trennmittel bei der Herstellung von Kunststoff-Formteilen.

### Beispiele

Zur Bestimmung der Konzentration an aromatischen Aminen an der Oberfläche von Formteilen aus Polyurethanweichformschaum wurde von den frisch hergestellten Formteilen nach einer definierten Lagerzeit (Lagerung im Dunkeln und in Kontakt mit Luft) die Haut-Zone (Randschicht, Dicke 1 mm) abgetrennt und mittels der ISOPA I.I.I.-Nachweismethode auf TDA (ISOPA I.I.I. ref. 11397, "robust method for the determination of toluene diamine content of flexible foams") bzw. MDA (ISOPA I.I.I. ref. 11399, "robust method for the determination of the diaminodiphenylmethane content of flexible polyurethane foams") analysiert. Die in den Beispielen angegebenen TDA- bzw. MDA-Gehalte entsprechen den Absolutgehalten (in ppm) in der Randschicht des Formschaumteils.

### Vergleichsbeispiel 1

Herstellung eines Polyurethan-Weichformschaumstoffes auf MDI-Basis:

Es wurde eine Polyolmischung (A-Komponente) aus den nachfolgend aufgeführten Einsatzstoffen hergestellt:

| | |
|---|---|
| 50 Gew.-Teile | eines Polyetherpolyols mit einer Hydroxylzahl (OHZ) von 35 mg KOH/g, einer mittleren Funktionalität von 2,6 und einem Ethylenoxid (EO)/Propylenoxid (PO)-Verhältnis von 14/86. |
| 50 Gew.-Teile | eines Polyetherpolyols mit einer Hydroxylzahl (OHZ) von 28 mg KOH/g, einer mittleren Funktionalität von 2,4 und einem Ethylenoxid (EO)/Propylenoxid (PO)-Verhältnis von 14/86. |
| 3,45 Gew.-Teile | Wasser |
| 0,26 Gew.-Teile | Treibkatalysator (Dabco^{®} BL-11, Air Products) |
| 0,35 Gew.-Teile | Gelkatalysator (Dabco^{®} 33LV, Air Products) |
| 0,53 Gew.-Teile | Diethanolamin (DEOA) |
| 0,3 Gew.-Teile | Silikonstabilisator (Tegostab^{®} B 8715LF, Goldschmidt AG) |
| 1,5 Gew.-Teile | eines Polyetherpolyols mit einer Hydroxylzahl (OHZ) von 37 mg KOH/g, einer mittleren Funktionalität von 2,9 und einem Ethylenoxid (EO)/Propylenoxid (PO)-Verhälthis von 72/28. |

Diese A-Komponente wurde bei einer Temperatur von 25°C mit einer Mischung aus 18 Gew.-% pMDI und 82 Gew.-% eines Gemischs aus 2,4'-MDI und 4,4'-MDI im Verhältnis von 2,3 : 1 (NCO-Gehalt 32,5 Gew.-%; B-Komponente) vermischt. Zur Herstellung von Formteilen wurde das Gemisch in eine auf 60°C temperierte, mit einem Trennmittel (Acmos^{®} 180-52, ACMOS Chemie GmbH & Co) behandelte 9,5-Liter-Form gegeben und dort aufschäumen gelassen. Die Menge des Gemisches wurde dabei so bemessen, dass die resultierenden Formteile eine Formteildichte von 55 kg/m³ aufweisen. Zur Herstellung von Formteilen mit Index 100 (Vergleichsbeispiel 1a) betrug das Mischungsverhältnis von A-Komponente zu B-Komponente 100:56, für Formteile mit Index 80 (Vergleichsbeispiel 1b) entsprechend 100:45. Die Form wurde mit einem Deckel verschlossen und in eine Presse oder Schließe eingebracht, um dem Schäumdruck entgegenzuwirken und das Werkzeug geschlossen zu halten. Nach 5 Minuten wurde der Deckel entfernt und der Schaumstoff durch mechanisches Zusammendrücken solange bearbeitet, bis der Schaum offenzellig, d.h. schrumpffrei war.

### MDA-Gehalte der Hautzone der Formteile:

| Vergl.-Bsp. | Index | 4,4'-MDA [ppm]^{a)} | 2,4'-MDA [ppm]^{a)} | 2,2'-MDA [ppm]^{a)} | 4,4'-MDA [ppm]^{b)} | 2,4'-MDA [ppm]^{b)} | 2,2'-MDA [ppm]^{b)} |
|---|---|---|---|---|---|---|---|
| 1a | 100 | <0,2 | 3,1 | 1,1 | ^{c)} | ^{c)} | ^{c)} |
| 1b | 80 | 1,8 | 63 | 5,4 | 0,3 | 5,4 | 0,9 |

| | | | | | | | |
|---|---|---|---|---|---|---|---|
| ^{a)} Lagerzeit 24h ^{b)} Lagerzeit 7 Tage ^{c)} nicht gemessen | | | | | | | |

### Mechanische Eigenschaften der Formteile (gemessen nach 7 Tagen):

| Vergl.-Bsp. | Index | Dichte [kg/m³] | CLD 4/40 [kPa] | Zugspannung [kPa] | Bruch-dehnung [%] | DVR 50% [%] | DVR 75% [%] |
|---|---|---|---|---|---|---|---|
| 1a | 100 | 52,4 | 10,0 | 172 | 96 | 6,6 | 10,4 |
| 1b | 80 | 50,1 | 4,3 | 106 | 113 | 6,3 | 7,9 |

| | | | | | | | |
|---|---|---|---|---|---|---|---|
| CLD 4/40: Stauchhärte 4.Zyklus bei 40% Verformung nach DIN EN ISO 3386-1-98. DVR: Druckverformungsrest bei 50% bzw. 75% Verformung (DIN EN ISO 1856). Zugspannung, Bruchdehnung nach DIN EN ISO 1798. | | | | | | | |

### Beispiele 1-3

Analog Vergleichsbeispiel 1 wurden Weichformschaumstoffteile hergestellt. Statt mit handelsüblichen Trennmittel wurde die Form mit einer Mischung aus 95 Gew.% Acmos^{®} 180-52 und 5 Gew.-% eines erfindungsgemäßen Zusatzstoffes in der üblichen Weise vorbehandelt. Die Ergebnisse sind in den nachfolgenden Tabellen zusammengefasst.

Folgende Zusatzstoffe wurden eingesetzt:
A: H₁₂-MDI (Desmodur^{®} W, Bayer AG)
B: Isophorondiisocyanat (Desmodur^{®} IPDI, Bayer AG)
C: polymeres MDI (Desmodur^{®} 44V20L, Bayer AG).

### MDA-Gehalte der Hautzone der Formteile:

| Bsp. | Index | Zusatz | 4,4'-MDA [ppm]^{a)} | 2,4'-MDA [ppm]^{a)} | 2,2'-MDA [ppm]^{a)} | 4,4'-MDA [ppm]^{b)} | 2,4'-MDA [ppm]^{b)} | 2,2'-MDA [ppm]^{b)} |
|---|---|---|---|---|---|---|---|---|
| 1a | 100 | A | < 0,2 | 2,4 | <0,2 | ^{c)} | ^{c)} | ^{c)} |
| 1b | 80 | A | <0,2 | 10 | <0,2 | ^{c)} | ^{c)} | ^{c)} |
| 2a | 100 | B | <0,2 | 3,1 | <0,2 | ^{c)} | ^{c)} | ^{c)} |
| 2b | 80 | B | 0,3 | 30 | 3,2 | <0,2 | 0,6 | <0,2 |
| 3a | 100 | C | <0,2 | 4,2 | <0,2 | ^{c)} | ^{c)} | ^{c)} |
| 3b | 80 | C | <0,2 | 39 | 4,2 | ^{c)} | ^{c)} | ^{c)} |

| | | | | | | | | |
|---|---|---|---|---|---|---|---|---|
| ^{a)} Lagerzeit 24h ^{b)} Lagerzeit 7 Tage ^{c)} nicht gemessen | | | | | | | | |

### Mechanische Eigenschaften der Formteile (gemessen nach 7 Tagen):

| Bsp. | Index | Dichte [kg/m³] | CLD 4/40 [kPa] | Zugspannung [kPa] | Bruch-dehnung [%] | DVR 50% [%] | DVR 75% [%] |
|---|---|---|---|---|---|---|---|
| 2a | 100 | 52,3 | 9,5 | 162 | 94 | 6,8 | 8,9 |
| 2b | 80 | 51,4 | 4,6 | 117 | 113 | 6,3 | 9,2 |

| | | | | | | | |
|---|---|---|---|---|---|---|---|
| CLD 4/40: Stauchhärte 4.Zyklus bei 40% Verformung nach DIN EN ISO 3386-1-98. DVR: Druckverformungsrest bei 50% bzw. 75% Verformung (DIN EN ISO 1856). Zugspannung, Bruchdehnung nach DIN EN ISO 1798. | | | | | | | |

### Vergleichsbeispiel 2

Es wurde eine Polyolmischung (A-Komponente) aus den nachfolgend aufgeführten Einsatzstoffen hergestellt:

| | |
|---|---|
| 50 Gew.-Teile | eines Polyetherpolyols mit einer Hydroxylzahl (OHZ) von 35 mg KOH/g, einer mittleren Funktionalität von 2,6 und |
| | einem Ethylenoxid (EO)/Propylenoxid (PO)-Veihältnis von 14/86. |
| 50 Gew.-Teile | eines Polyetherpolyols mit einer Hydroxylzahl (OHZ) von 28 mg KOH/g, einer mittleren Funktionalität von 2,4 und einem Ethylenoxid (EO)/Propylenoxid (PO)-Verhältnis von 14/86. |
| 3,45 Gew.-Teile | Wasser |
| 0,26 Gew.-Teile | Treibkatalysator (Dabco^{®} BL-11, Air Products) |
| 0,35 Gew.-Teile | Gelkatalysator (Dabco^{®} 33LV, Air Products) |
| 0,53 Gew.-Teile | Diethanolamin (DEOA) |
| 0,3 Gew.-Teile | Silikonstabilisator (Tegostab^{®} B 8715LF, Goldschmidt AG) |
| 1,5 Gew.-Teile | eines Polyetherpolyols mit einer Hydroxylzahl (OHZ) von 37 mg KOH/g, einer mittleren Funktionalität von 2,9 und einem Ethylenoxid (EO)/Propylenoxid (PO)-Verhältnis von 72/28. |
| 5 Gew.-Teile | Isophorondiisocyanat (Desmodur^{®} IPDI, Bayer AG) |

Diese A-Komponente wurde bei einer Temperatur von 25°C mit einer Mischung aus 18 Gew.-% pMDI und 82 Gew.-% eines Gemischs aus 2,4'-MDI und 4,4'-MDI im Verhältnis von 2,3 : 1 (NCO-Gehalt 32,5 Gew.-%; B-Komponente) vermischt. Zur Herstellung von Formteilen wurde das Gemisch in eine auf 60°C temperierte, mit einem Trennmittel (Acmos^{®} 180-52, ACMOS Chemie GmbH & Co) behandelte 9,5-Liter-Form gegeben und dort aufschäumen gelassen. Die Menge des Gemisches wurde dabei so bemessen, dass die resultierenden Formteile eine Formteildichte von 55 kg/m³ aufweisen. Zur Herstellung von Formteilen mit Index 80 betrug das Mischungsverhältnis von A-Komponente zu B-Komponente 100:45 (Anmerkung: Das Zusatzmittel Desmodur^{®} IPDI wurde bei der Berechnung des Index nicht mit einbezogen). Die Form wurde mit einem Deckel verschlossen und in eine Presse oder Schließe eingebracht, um dem Schäumdruck entgegenzuwirken und das Werkzeug geschlossen zu halten. Nach 5 Minuten wurde der Deckel entfernt und der Schaumstoff durch mechanisches Zusammendrücken solange bearbeitet, bis der Schaum offenzellig, d.h. schrumpffrei war.

### MDA-Gehalte der Hautzone der Formteile:

| Vergl.-Bsp. | Index | 4,4'-MDA [ppm]^{a)} | 2,4'-MDA [ppm]^{a)} | 2,2'-MDA [ppm]^{a)} | 4,4'-MDA [ppm]^{b)} | 2,4'-MDA [ppm]^{b)} | 2,2'-MDA [ppm]^{b)} |
|---|---|---|---|---|---|---|---|
| 2 | 80 | <0,2 | 4 | <0,2 | <0,2 | 1,5 | <0,2 |

| | | | | | | | |
|---|---|---|---|---|---|---|---|
| ^{a)} Lagerzeit 24h ^{b)} Lagerzeit 7 Tage | | | | | | | |

### Mechanische Eigenschaften der Formteile (gemessen nach 7 Tagen):

| Vergl.-Bsp. | Index | Dichte [kg/m³] | CLD 4/40 [kPa] | Zugspannung [kPa] | Bruch-dehnung [%] | DVR 50% [%] | DVR 75% [%] |
|---|---|---|---|---|---|---|---|
| 2 | 80 | 51,9 | 6,8 | 165 | 124 | 8,6 | 12,7 |

| | | | | | | | |
|---|---|---|---|---|---|---|---|
| CLD 4/40: Stauchhärte 4.Zyklus bei 40% Verformung nach DIN EN ISO 3386-1-98. DVR: Druckverformungsrest bei 50% bzw. 75% Verformung (DIN EN ISO 1856). Zugspannung, Bruchdehnung nach DIN EN ISO 1798. | | | | | | | |

### Vergleichsbeispiel 3

Herstellung eines Polyurethan-Weichformschaumstoffes auf TDI-Basis:

Es wurde eine Polyolmischung (A-Komponente) aus den nachfolgend aufgeführten Einsatzstoffen hergestellt:

| | |
|---|---|
| 100 Gew.-Teile | eines Polyols mit der Hydroxylzahl (OHZ) von 28 mg KOH/g, einer mittleren Funktionalität von 2,4 und einem Ethylenoxid (EO)/Propylenoxid (PO)-Verhältnis von 18/82 |
| 3,2 Gew.-Teile | Wasser |
| 0,1 Gew.-Teile | Treibkatalysator (Dabco^{®} BL-11, Air Products) |
| 0,25 GeW.-Teile | Gelkatalysator (Dabco^{®} 33LV, Air Products) |
| 1,0 Gew.-Teile | Diethanolamin (DEOA) |
| 1,0 Gew.-Teile | Silikonstabilisator (Tegostab^{®} B 8719, Goldschmidt AG) |

Diese A-Komponente wurde bei einer Temperatur von 25°C mit TDI eines NCO-Gehalts von 48,3 Gew.-% (B-Komponente: Desmodur^{®} T80, Bayer AG) vermischt. Zur Herstellung von Formteilen wurde das Gemisch in eine auf 60°C temperierte, mit einem Trennmittel (Acmos^{®} 180-52, ACMOS Chemie-GmbH & Co) behandelte 9,5-Liter-Form gegeben und dort aufschäumen gelassen. Die Menge des Gemisches wurde dabei so bemessen, dass die resultierenden Formteile eine Formteildichte von 42 kg/m³ aufweisen. Zur Herstellung von Formteilen mit Index 100 (Vergleichsbeispiel 3a) betrug das Mischungsverhältnis von A-Komponente zu B-Komponente 100:36, für Formteile mit Index 80 (Vergleichsbeispiel 3b) entsprechend 100:29. Die Form wurde mit einem Deckel verschlossen und in eine Presse oder Schließe eingebracht, um dem Schäumdruck entgegenzuwirken und das Werkzeug geschlossen zu halten. Nach 6 Minuten wurde der Deckel entfernt und der Schaumstoff durch mechanisches Zusammendrücken solange bearbeitet, bis der Schaum offenzellig, d.h. schrumpffrei war.

### TDA-Gehalte der Hautzone der Formteile:

| Vergl.-Bsp. | Index | 2,4-TDA [ppm]^{a)} | 2,6-TDA [ppm]^{a)} | 2,4-TDA [ppm]^{b)} | 2,6-TDA [ppm]^{b)} | 2,4-TDA [ppm]^{c)} | 2,6-TDA [ppm]^{c)} |
|---|---|---|---|---|---|---|---|
| 3a | 100 | 2,8 | 231,3 | 0,5 | 11,0 | 0,4 | 1,4 |
| 3b | 80 | 8,0 | 484,0 | -^{d)} | -^{d)} | 1,5 | 43,5 |

| | | | | | | | |
|---|---|---|---|---|---|---|---|
| ^{a)} Lagerzeit 24h ^{b)} Lagerzeit 7 Tage ^{c)} Lagerzeit 14 Tage ^{d)} nicht gemessen | | | | | | | |

### Mechanische Eigenschaften der Formteile (gemessen nach 7 Tagen):

| Vergl.-Bsp. | Index | Dichte [kg/m³] | CLD 4/40 [kPa] | Zugspannung [kPa] | Bruch-dehnung [%] | DVR 50% [%] | DVR 75% [%] |
|---|---|---|---|---|---|---|---|
| 3a | 100 | 40,9 | 2,73 | 99 | 120 | 4,1 | 6,1 |
| 3b | 80 | 41,8 | 1,82 | 91 | 173 | 6,1 | 7,8 |

| | | | | | | | |
|---|---|---|---|---|---|---|---|
| CLD 4/40: Stauchhärte 4.Zyklus bei 40% Verformung nach DIN EN ISO 3386-1-98. DVR: Druckverformungsrest bei 50% bzw. 75% Verformung (DIN EN ISO 1856). Zugspannung, Bruchdehnung nach DIN EN ISO 1798. | | | | | | | |

### Beispiele 4-15

Analog Vergleichsbeispiel 3 wurden Weichformschaumstoffteile hergestellt. Statt mit handelsüblichen Trennmittel wurde die Form mit einer Mischung aus 95 Gew.-% Acmos^{®} 180-52 und 5 Gew.-% eines erfindungsgemäßen Zusatzstoffes in der üblichen Weise vorbehandelt. Die Ergebnisse sind in den nachfolgenden Tabellen zusammengefasst.

Folgende Zusatzstoffe wurden eingesetzt:
A: H₁₂-MDI (Desmodur^{®} W, Bayer AG)
B: Isophorondiisocyanat (Desmodur^{®} IPDI, Bayer AG)
D: Duroldiisocyanat
E: 1,4 Di-(isocyanatomethyl)cyclohexan
F: Dimethylcarbonat
G: Phthalsäureanhyhrid
H: Acetessigsäureethylester
I: Harnstoff
J: 1,3-Bis-(isocyanato-1-methylethyl)-benzol (TMXDI)
K: trimeres Hexamethylendiisocyanat (Desmodur^{®} N 3300, Bayer AG)
L: dimeres Hexamethylendiisocyanat (Desmodur^{®} N 3400, Bayer AG)
M: β-Cyclodextrin

### TDA-Gehalte der Hautzone der Formteile:

| Bsp. | Index | Zusatz | 2,4-TDA [ppm]^{a)} | 2,6-TDA [ppm]^{a)} | 2,4-TDA [ppm]^{b)} | 2,6-TDA [ppm]^{b)} | 2,4-TDA [ppm]^{c)} | 2,6-TDA [ppm]^{c)} |
|---|---|---|---|---|---|---|---|---|
| 4 | 100 | D | 1,3 | 75 | 0,5 | 4,9 | < 0,2 | 0,3 |
| 5a | 100 | E | 0,5 | 25 | 0,2 | 0,9 | < 0,2 | 0,2 |
| 5b | 80 | E | 4,8 | 467 | ^{d)} | ^{d)} | < 0,2 | 24 |
| 6a | 100 | B | < 0,2 | 41 | < 0,2 | 0,5 | < 0,2 | 0,5 |
| 6b | 80 | B | < 0,2 | 302 | < 0,2 | 7,1 | 0,6 | 7,3 |
| 7a | 100 | A | 0,5 | 15 | < 0,2 | 0,7 | < 0,2 | 0,3 |
| 7b | 80 | A | 4,7 | 417 | < 0,2 | 15 | ^{d)} | ^{d)} |
| 8 | 100 | F | 1,3 | 99 | 0,2 | 4,0 | < 0,2 | 0,3 |
| 9 | 100 | G | 1,2 | 88 | 0,5 | 3,5 | < 0,2 | 0,3 |
| 10 | 100 | H | 1,5 | 96 | < 0,2 | 3,9 | 0,5 | 0,3 |
| 11 | 100 | I | 0,8 | 93 | < 0,2 | 1,4 | 0,4 | 0,3 |
| 12a | 100 | J | 1,0 | 70 | < 0,2 | 1,8 | 0,3 | 0,3 |
| 12b | 80 | J | 8,2 | 265 | < 0,2 | 39 | ^{d)} | ^{d)} |
| 13 | 100 | K | 0,7 | 109 | 0,2 | 1,0 | < 0,2 | 0,2 |
| 14 | 100 | L | 0,9 | 145 | < 0,2 | 0,6 | 0,5 | 0,6 |
| 15 | 80 | M | 2,3 | 231 | 0,2 | 28 | <0,2 | 9 |

| | | | | | | | | |
|---|---|---|---|---|---|---|---|---|
| ^{a)} Lagerzeit 24h ^{b)} Lagerzeit 7 Tage ^{c)} Lagerzeit 14 Tage ^{d)} nicht gemessen | | | | | | | | |

### Mechanische Eigenschaften der Formteile (gemessen nach 7 Tagen):

| Bsp. | Index | Dichte [kg/m³] | CLD 4/40 [kPa] | Zugspannung [kPa] | Bruch-dehnung [%] | DVR 50% [%] | DVR 75% [%] |
|---|---|---|---|---|---|---|---|
| 6a | 100 | 40,5 | 2,68 | 98 | 126 | 4,3 | 6,5 |
| 6b | 80 | 41,3 | 1,87 | 92 | 177 | 5,8 | 8,7 |
| 12b | 80 | 40,9 | 1,53 | 99 | 184 | 5,6 | 9,2 |

| | | | | | | | |
|---|---|---|---|---|---|---|---|
| CLD 4/40: Stauchhärte 4.Zyklus bei 40% Verformung nach DIN EN ISO 3386-1-98. DVR: Druckverformungsrest bei 50% bzw. 75% Verformung (DIN EN ISO 1856). Zugspannung, Bruchdehnung nach DIN EN ISO 1798. | | | | | | | |

### Beispiele 16-I bis 16-III

Analog Vergleichsbeispiel 3 wurden Weichformschaumstoffteile hergestellt. Statt mit handelsüblichen Trennmittel wurde die Form mit einer Mischung aus Acmos^{®} 180-52 und verschiedenen Konzentrationen an IPDI (Desmodur^{®} IPDI, Bayer AG) in der üblichen Weise vorbehandelt. Die Ergebnisse sind in der nachfolgenden Tabelle zusammengefasst.

### TDA-Gehalte der Hautzone der Formteile:

| Bsp. | Index | Acmos^{®} 180-52 [Gew.-%] | IPDI [Gew.-%] | 2,4-TDA [ppm]^{a)} | 2,6-TDA [ppm]^{a)} | 2,4-TDA [ppm]^{b)} | 2,6-TDA [ppm]^{b)} |
|---|---|---|---|---|---|---|---|
| 16-I | 80 | 99,5 | 0,5 | 11 | 454 | ^{c)} | ^{c)} |
| 16-II | 80 | 98 | 2,0 | 6 | 350 | < 0,2 | 1,7 |
| 16-III | 80 | 90 | 10,0 | 2,5 | 240 | < 0,2 | 2,9 |

| | | | | | | | |
|---|---|---|---|---|---|---|---|
| ^{a)} Lagerzeit 24h ^{b)} Lagerzeit 7 Tage ^{c)} nicht gemessen | | | | | | | |

### Vergleichsbeispiel 4

Es wurde eine Polyolmischung (A-Komponente) aus den nachfolgend aufgeführten Einsatzstoffen hergestellt:

| | |
|---|---|
| 100 Gew.-Teile | eines Polyols mit der Hydroxylzahl (OHZ) von 28 mg KOH/g, einer mittleren Funktionalität von 2,4 und einem Ethylenoxid (EO)/Propylenoxid (PO)-Verhältnis von 18/82. |
| 3,2 Gew.-Teile | Wasser |
| 0,1 Gew.-Teile | Treibkatalysator (Dabco^{®} BL-11, Air Products) |
| 0,25 Gew.-Teile | Gelkatalysator (Dabco^{®} 33LV, Air Products) |
| 1,0 Gew.-Teile | Diethanolamin (DEOA) |
| 1,0 Gew.-Teile | Silikonstabilisator (Tegostab^{®} B 8719, Goldschmidt AG) |
| 5,0 Gew.-Teile | Isophorondiisocyanat (Desmodur^{®} IPDI, Bayer AG) |

Diese A-Komponente wurde bei einer Temperatur von 25°C mit TDI eines NCO-Gehalts von 48,3 Gew.-% (B-Komponente: Desmodur^{®} T80, Bayer AG) vermischt. Zur Herstellung von Formteilen wurde das Gemisch in eine auf 60°C temperierte, mit einem Trennmittel (Acmos^{®} 180-52, ACMOS Chemie-GmbH & Co) behandelte 4,2-Liter-Form gegeben und dort aufschäumen gelassen. Die Menge des Gemisches wurde dabei so bemessen, dass die resultierenden Formteile eine Formteildichte von 42 kg/m³ aufweisen. Zur Herstellung von Formteilen mit Index 80 betrug das Mischungsverhältnis von A-Komponente zu B-Komponente 105:30,4 (Anmerkung: Das Zusatzmittel Desmodur^{®} IPDI wurde bei der Berechnung des Index nicht mit einbezogen). Die Form wurde mit einem Deckel verschlossen und in eine Presse oder Schließe eingebracht, um dem Schäumdruck entgegenzuwirken und das Werkzeug geschlossen zu halten. Nach 5 Minuten wurde der Deckel entfernt und der Schaumstoff durch mechanisches Zusammendrücken solange bearbeitet, bis der Schaum offenzellig, d.h. schrumpffrei war.

### TDA-Gehalte der Hautzone der Formteile:

| Vergl.-Bsp. | Index | 2,4-TDA [ppm]^{a)} | 2,6-TDA [ppm]^{a)} | 2,4-TDA [ppm]^{b)} | 2,6-TDA [ppm]^{b)} |
|---|---|---|---|---|---|
| 4 | 80 | 0,2 | 19 | < 0,2 | 0,3 |

| | | | | | |
|---|---|---|---|---|---|
| ^{a)} Lagerzeit 24h ^{b)} Lagerzeit 7 Tage | | | | | |

### Mechanische Eigenschaften der Formteile (gemessen nach 7 Tagen):

| Vergl.-Bsp. | Index | Dichte [kg/m³] | CLD 4/40 [kPa] | Zugspannung [kPa] | Bruch-dehnung [%] | DVR 50% [%] | DVR 75% [%] |
|---|---|---|---|---|---|---|---|
| 4 | 80 | 41,6 | 3,07 | 118 | 153 | 7,0 | 49,5 |

| | | | | | | | |
|---|---|---|---|---|---|---|---|
| CLD 4/40: Stauchhärte 4.Zyklus bei 40% Verformung nach DIN EN ISO 3386-1-98. DVR: Druckverformungsrest bei 50% bzw. 75% Verformung (DIN EN ISO 1856). Zugspannung, Bruchdehnung nach DIN EN ISO 1798. | | | | | | | |

### Vergleichsbeispiel 5

Vorgehensweise und Durchführung wie Vergleichsbeispiel 4, wobei an Stelle von IPDI 5 Gew.-Teile TMXDI (1,3-Bis-(isocyanato-1-methylethyl)-benzol) der Polyolformulierung zugesetzt wurden.

### TDA-Gehalte der Hautzone der Formteile:

| Vergl.-Bsp. | Index | 2,4-TDA [ppm]^{a)} | 2,6-TDA [ppm]^{a)} | 2,4-TDA [ppm]^{b)} | 2,6-TDA [ppm]^{b)} |
|---|---|---|---|---|---|
| 5 | 80 | 1,5 | 73 | < 0,2 | 0,4 |

| | | | | | |
|---|---|---|---|---|---|
| ^{a)} Lagerzeit 24h ^{b)} Lagerzeit 7 Tage | | | | | |

### Mechanische Eigenschaften der Formteile (gemessen nach 7 Tagen):

| Vergl.-Bsp. | Index | Dichte [kg/m³] | CLD 4/40 [kPa] | Zugspannung [kPa] | Bruch-dehnung [%] | DVR 50% [%] | DVR 75% [%] |
|---|---|---|---|---|---|---|---|
| 5 | 80 | 41,2 | 2,23 | 127 | 196 | 7,1 | 56,0 |

| | | | | | | | |
|---|---|---|---|---|---|---|---|
| CLD 4/40: Stauchhärte 4.Zyklus bei 40% Verformung nach DIN EN ISO 3386-1-98, DVR: Druckverformungsrest bei 50% bzw. 75% Verformung (DIN EN ISO 1856). Zugspannung, Bruchdehnung nach DIN EN ISO 1798. | | | | | | | |

### Vergleichsbeispiel 6

Vorgehensweise und Durchführung wie Vergleichsbeispiel 3, wobei das handelsübliche Trennmittel PURA 1448H (RATEC International GmbH) eingesetzt wurde.

### TDA-Gehalte der Hautzone der Formteile:

| Vergl.-Bsp. | Index | 2,4-TDA [ppm]^{a)} | 2,6-TDA [ppm]^{a)} |
|---|---|---|---|
| 6 | 100 | 3,9 | 207 |

| | | | |
|---|---|---|---|
| ^{a)} Lagerzeit 24h | | | |

## Patentansprüche

1. Formtrennmittel, das mindestens eine gegenüber aromatischen Aminen reaktive Verbindung ausgewählt aus der Gruppe von
Di- oder Polyisocyanaten der Formel Q(NCO)ₙ in der n eine ganze Zahl von 2 bis 4 und Q einen aliphatischen Kohlenwasserstoffrest mit 2 bis 18 C-Atomen, einen cycloaliphatischen Kohlenwasserstoffrest mit 4 bis 15, C-Atomen, einen aromatischen Kohlenwasserstoffrest mit 6 bis 15 C-Atomen, oder einen araliphatischen Kohlenwasserstoffrest mit 8 bis 15 C-Atomen bedeuten,
Derivaten von anorganischen Säuren,
Derivaten von organischen Säuren ausgewählt aus der Gruppe bestehend aus Ameisensäuremethylester, Essigsäureethylester, Dodecansäuremethylester, Acetessigsäureethylester, Malonsäurediethylester, Lactone von **C₃-C₆**-Hydroxycarbonsäuren mit einem Molekulargewicht von 70 bis 300 g/mol, Kondensationsprodukte von aliphatischen, cycloaliphatischen, araliphatischen und/oder aromatischen Dicarbonsäuren mit 2 bis 15 Kohlenstoffatomen und aliphatischen, cycloaliphatischen, araliphatischen und/oder aromatischen Dialkoholen mit 2 bis 15 Kohlenstoffatomen, Ameisensäureanhydrid, Essigsäureanhydrid, Propionsäureanhydrid, Fumarsäureanhydrid, Adipinsäureanhydrid, Phthalsäureanhydrid, Glutarsäureanhydrid, Pyrrolidin-2,3,4,5-tetracarbonsäureanhydrid, Malonsäureanhydrid, Benzoesäureanhydrid, Polymaleinsäureanhydrid, Maleinsäureanhydrid, Pyromellitsäureanhydrid, Phenylessiasäureanhydrid, n-Octylenbernsteinsäureanhydrid, n-Dodicylen-bernsteinsäureanhydrid, Poly-(ethylen-co-acrylsäurebutylester-co-maleinsäureanhydrid und Poly-(styrol-comaleinsäureanhydrid,
Derivate der Kohlensäure ausgewählt aus der Gruppe bestehend aus Dimethylcarbonat, Diethylcarbonat, Diphenylcarbonat, Ethylencarbonat und Propylencarbonat,
Harnstoff und/oder dessen Derivate und
organische, cyclische Verbindungen mit einem Molekulargewicht von 200 bis 3000 g/mol ausgewählt aus der Gruppe bestehend aus α-Cyclodextrin, β-Cyclodextrin, γ-Cyclodextrin, Umsetzungsprodukte dieser Cyclodextrine mit Alkylenoxiden, 4-tert-Butylcalix[4]aren, 4-tert-Butylcalix[6]aren, 4-tert-Butylcalix[8]aren, 4-Sulfocalix[4]aren, 4-Sulfocalix[6]aren, 4-Sulfocalix[8]aren, C-Methylcalix[4]resorcinaren, Tetra-N-pentylcalix[4]resorcinaren und [2.2]Paracyclophan
enthält.

2. Verfahren zur Herstellung von Kunststoffformteilen, bei dem
a) die Form mit einem Formtrennmittel nach Anspruch 1 vorbehandelt wird, das mindestens eine gegenüber aromatischen Aminen reaktive Verbindung enthält,
b) in die vorbehandelte Form die zur Bildung des Formteils benötigte Kunststoffmasse eingebracht und das Formteil gebildet wird, und
c) das gebildete Formteil anschließend entnommen wird.

3. Verwendung eines Formtrennmittels nach Anspruch 1, das mindestens eine gegenüber aromatischen Aminen reaktive Verbindung enthält, bei der Herstellung von Kunststoff-Formteilen.

## Claims

1. Mould-release agent which comprises at least one compound that is reactive towards aromatic amines and that has been selected from the group of di- or polyisocyanates of the formula Q(NCO)ₙ in which n is an integer from 2 to 4 and Q is an aliphatic hydrocarbon moiety having from 2 to 18 carbon atoms, or is a cycloaliphatic hydrocarbon moiety having from 4 to 15 carbon atoms, or is an aromatic hydrocarbon moiety having from 6 to 15 carbon atoms, or is an araliphatic hydrocarbon moiety having from 8 to 15 carbon atoms, derivatives of inorganic acids,
derivatives of organic acids selected from the group consisting of methyl formate, ethyl acetate, methyl dodecanoate, ethyl acetoacetate, diethyl malonate, lactones of C₃-C₆-hydroxycarboxylic acids with molar mass from 70 to 300 g/mol, condensates of aliphatic, cycloaliphatic, araliphatic and/or aromatic dicarboxylic acids having from 2 to 15 carbon atoms and aliphatic, cycloaliphatic, araliphatic and/or aromatic dialcohols having from 2 to 15 carbon atoms,
formic anhydride, acetic anhydride, propionic anhydride, fumaric anhydride, adipic anhydride, phthalic anhydride, glutaric anhydride, pyrrolidine-2,3,4,5-tetracarboxylic anhydride, malonic anhydride, benzoic anhydride, polymaleic anhydride, maleic anhydride, pyromellitic anhydride, phenylacetic anhydride, n-octylene-succinic anhydride, n-dodecylenesuccinic anhydride, poly(ethylene-co-butyl acrylate-co-maleic anhydride) and poly(styrene-co-maleic anhydride),
derivatives of carbonic acid selected from the group consisting of dimethyl carbonate, diethyl carbonate, diphenyl carbonate, ethylene carbonate and propylene carbonate,
urea and/or its derivatives and
organic, cyclic compounds with molar mass from 200 to 3000 g/mol selected from the group consisting of α-cyclodextrin, β-cyclodextrin, γ-cyclodextrin, reaction products of these cyclodextrins with alkylene oxides, 4-tert-butylcalix[4]arene, 4-tert-butylcalix[6]arene, 4-tert-butylcalix[8]-arene, 4-sulfocalix[4]arene, 4-sulfocalix[6]arene, 4-sulfocalix[8]arene, C-methylcalix[4]resorcin-arene, tetra-N-pentylcalix[4]resorcinarene and [2.2]paracyclophane.

2. Process for producing plastics mouldings, by
a) pretreating the mould with a mould release agent according to Claim 1 which comprises at least one compound reactive towards aromatic amines,
b) introducing the plastics composition necessary for formation of the moulding to the pretreated mould and forming the moulding, and
c) then removing the resultant moulding.

3. Use of a mould-release agent according to Claim 1 which comprises at least one compound reactive towards aromatic amines, in the production of plastics mouldings.

## Revendications

1. Agent de démoulage, qui contient au moins un composé réactif par rapport aux amines aromatiques, choisi dans le groupe formé par
- les diisocyanates ou les polyisocyanates de formule Q(NCO)ₙ dans laquelle n signifie un nombre entier de 2 à 4 et Q un radical hydrocarboné aliphatique comprenant 2 à 18 atomes de carbone, un radical hydrocarboné cycloaliphatique comprenant 4 à 15 atomes de carbone, un radical hydrocarboné aromatique comprenant 6 à 15 atomes de carbone, ou un radical hydrocarboné araliphatique comprenant 8 à 15 atomes de carbone,
- les dérivés d'acides inorganiques,
- les dérivés d'acides organiques choisis dans le groupe constitué par l'ester méthylique de l'acide formique, l'ester éthylique de l'acide acétique, l'ester méthylique de l'acide dodécanoïque, l'ester éthylique de l'acide acétoacétique, l'ester diéthylique de l'acide malonique, les lactones d'acides C₃-C₆-hydroxycarboxyliques présentant un poids moléculaire de 70 à 300 g/mole, les produits de condensation d'acides dicarboxyliques aliphatiques, cycloaliphatiques, araliphatiques et/ou aromatiques comprenant 2 à 15 atomes de carbone et de dialcools aliphatiques, cycloaliphatiques, araliphatiques et/ou aromatiques comprenant 2 à 15 atomes de carbone, l'anhydride de l'acide formique, l'anhydride de l'acide acétique, l'anhydride de l'acide propionique, l'anhydride de l'acide fumarique, l'anhydride de l'acide adipique, l'anhydride de l'acide phtalique, l'anhydride de l'acide glutarique, l'anhydride de l'acide pyrrolidine-2,3,4,5-tétracarboxylique, l'anhydride de l'acide malonique, l'anhydride de l'acide benzoïque, l'anhydride de l'acide polymaléique, l'anhydride de l'acide maléique, l'anhydride de l'acide pyromellitique, l'anhydride de l'acide phénylacétique, l'anhydride de l'acide n-octylènesuccinique, l'anhydride de l'acide n-dodecylènesuccinique, le poly-(éthylène-co-ester butylique de l'acide acrylique-co-anhydride de l'acide maléique) et le poly-(styrène-co-anhydride de l'acide maléique),
- les dérivés de l'acide carbonique, choisis dans le groupe constitué par le diméthylcarbonate, le diéthylcarbonate, le diphénylcarbonate, l'éthylènecarbonate et le propylènecarbonate,
- l'urée et/ou ses dérivés et
- les composés organiques, cycliques présentant un poids moléculaire de 200 à 3000 g/mole, choisis dans le groupe constitué par l'α-cyclodextrine, la β-cyclodextrine, la γ-cyclodextrine, les produits de transformation de ces cyclodextrines avec des oxydes d'alkylène, le 4-tert-butylcalix[4]arène, le 4-tert-butylcalix[6]arène, le 4-tert-butylcalix[8]arène, le 4-sulfocalix[4]arène, le 4-sulfocalix[6]arène, le 4-sulfocalix[8]arène, le C-méthylcalix[4]résorcinol-arène, le tétra-N-pentylcalix[4]résorcinol-arène et le [2,2]paracyclophane.

2. Procédé de fabrication de pièces moulées en matériau synthétique, dans lequel
a) le moule est prétraité avec un agent de démoulage selon la revendication 1, qui contient au moins un composé réactif par rapport aux amines aromatiques,
b) la masse de matériau synthétique nécessaire à la formation de la pièce moulée est introduite dans le moule prétraité et la pièce moulée est formée, et
c) la pièce moulée formée est ensuite prélevée.

3. Utilisation d'un agent de démoulage selon la revendication 1, qui contient au moins un composé réactif par rapport aux amines aromatiques, lors de la fabrication de pièces moulées en matériau synthétique.
